# EUROPEAN PATENT APPLICATION

(11) **EP 0 827 318 A2**
(43) Date of publication of application: **04.03.1998**
(21) Application number: 97114452.2
(22) Date of filing: 21.08.1997
(51) Int. Cl.: H04M 3/42, H04M 11/06, G07F 7/00

(54) **Telephone commerce**

(30) Priority: 21.08.1996 IL 11910696
(71) Applicant: Algorithmic Research Ltd., Givat Shmuel 54030 (IL)
(72) Inventor: Tulpan, Yosef, Nes Ziona (IL)
(74) Representative: Bianchetti, Giuseppe, Prof.

(57) **Abstract**

This invention discloses an apparatus for facilitating secure electronic commerce via the telephone including a subscriber unit associated with a subscriber telephone which may be connected to a telephone network and a vendor unit associated with a vendor telephone system and vendor computer system, which may communicate with the subscriber unit via the telephone network, the subscriber unit including a communication device for communicating with the vendor computer system and with the subscriber, a subscriber unit operative in accordance with a cryptographic payment protocol for effecting secure payment transactions with the vendor computer system, a human interface device operative to provide information to a subscriber, and a selectably actuatable security barrier operator operative to disable voice communication between the subscriber telephone and the telephone network without interfering with computer communications between the subscriber unit and the telephone network.

## Description

### FIELD OF THE INVENTION

The present invention relates to telephony in general and more particularly to apparatus and techniques for secure data transmission via telephone links.

### BACKGROUND OF THE INVENTION

Commercial transactions carried out via the telephone are susceptible to breaches of security, such as misuse of a credit card number transmitted via the telephone. The credit card number may be intercepted by an eavesdropper on a telephone line, by a vendor or by persons working with the vendor.

Cryptographic payment protocols have been developed for enabling secure commercial transactions, such as credit card transactions, to take place via the telephone. One such protocol is the Secure Electronic Transactions (SET) protocol, which allows secure exchange of credit-card information. The SET protocol and similar cryptographic payment protocols providing a similar level of security require the transmission of a relatively large amount of digitized data and thus are not suitable for use in transactions wherein the data is transmitted by voice. Such protocols do not provide security of sensitive information at the customer site but only provide security en route to the vendor site.

### SUMMARY OF THE INVENTION

The present invention seeks to provide apparatus for facilitating secure electronic commerce, such as credit card commerce, via the telephone including a subscriber unit associated with a subscriber telephone which may be connected to a telephone network and a vendor unit associated with a vendor telephone system and vendor computer system which may communicate with the subscriber unit via the telephone network, the subscriber unit including a communication device for communicating with the vendor computer system and with the subscriber, a processor operative in accordance with a cryptographic payment protocol for effecting secure payment transactions with the vendor computer system, an human interface device operative to provide information to a subscriber, and a selectably actuatable security barrier operator operative to disable voice communication between the subscriber telephone and the telephone network without interfering with computer communications between the subscriber unit and the telephone network.

Further in accordance with a preferred embodiment of the present invention the communication device includes a modem for communicating with the vendor computer system.

Additionally in accordance with a preferred embodiments of the present invention the communication device also includes a DTMF processor responsive to DTMF inputs at the subscriber telephone. Alternatively the communication device includes a voice recognizer responsive to voice inputs at the subscriber telephone.

Further in accordance with a preferred embodiment of the present invention the human interface device includes a voice annunciator operative to provide voice communication to a subscriber via the subscriber telephone.

Furthermore in accordance with a preferred embodiment of the present invention the security barrier is operative to disable voice communication between the subscriber telephone and the telephone network without interfering with computer communication between the subscriber unit and the telephone network, the security barrier having a normal mode of operation and a secure mode of operation, wherein in the normal mode of operation the security barrier does not disable voice communication and the subscriber telephone can be used in a conventional manner, and when actuated to be in the secure mode of operation, the security barrier does disable voice communication and permits computer communication according to the cryptographic payment protocol between the subscriber unit and the vendor computer system via the telephone network.

Additionally in accordance with a preferred embodiment of the present invention the human interface device is operative during operation in the secure mode of operation to communicate information and questions to the subscriber, who can respond to the subscriber telephone via DTMF or voice input.

Further in accordance with a preferred embodiment of the present invention the subscriber unit includes an indicator, indicating to a subscriber when the subscriber unit is operating in the secure mode of operation.

Still further in accordance with a preferred embodiment of the present invention the security barrier may be actuated by the subscriber or by the vendor computer system or vendor telephone system.

Moreover in accordance with a preferred embodiment of the present invention the security barrier may be actuated by the subscriber either by manual actuation of a switch on the subscriber unit or by a DTMF input or a voice input.

### BRIEF DESCRIPTION OF THE DRAWINGS

The present invention will be understood and appreciated more fully from the following detailed description, taken in conjunction with the drawings in which:
Fig. 1 is a simplified block diagram illustration of apparatus for facilitating secure electronic commerce via the telephone constructed and operative in accordance with one preferred embodiment of the present invention;
Fig. 2 is a simplified block diagram illustration of apparatus for facilitating secure electronic commerce via the telephone constructed and operative in accordance with another preferred embodiment of the present invention;
Fig. 3 is a simplified block diagram illustration of apparatus for facilitating secure electronic commerce via the telephone constructed and operative in accordance with yet another preferred embodiment of the present invention;
Fig. 4 is a simplified flow chart illustrating operation of the apparatus of the present invention;
Fig. 5 is a simplified diagram illustrating apparatus of the present invention in a normal mode of operation;
Fig. 6 is a simplified diagram illustrating apparatus of the present invention in a secure mode of operation; and
Fig. 7 is a simplified block diagram illustrating apparatus located at a vendor site for operation of the present invention.

### DETAILED DESCRIPTION OF A PREFERRED EMBODIMENT

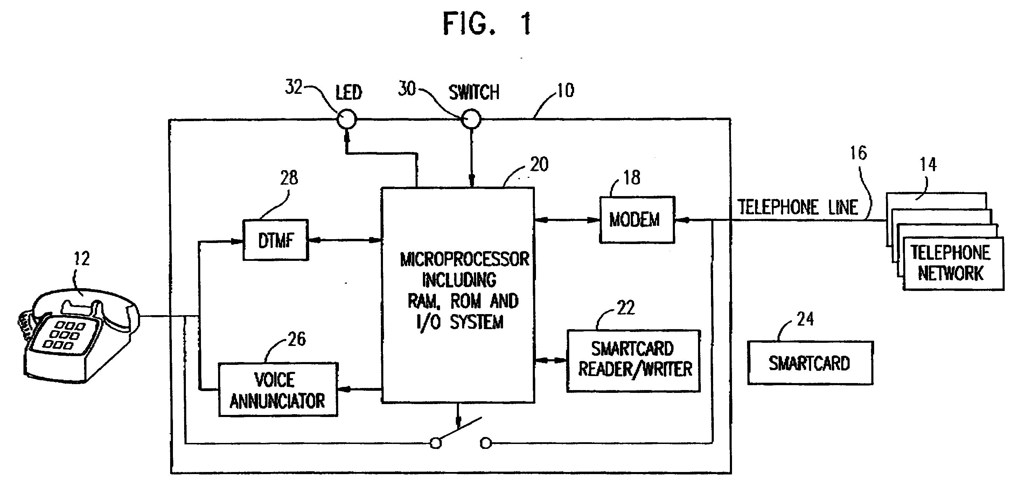

Reference is now made to Fig. 1, which is a simplified block diagram illustration of apparatus for facilitating secure electronic commerce via the telephone constructed and operative in accordance with one preferred embodiment of the present invention. It is noted that throughout the specification and the claims, the term electronic commerce encompasses any kind of electronically transacted commerce, including credit card commerce.

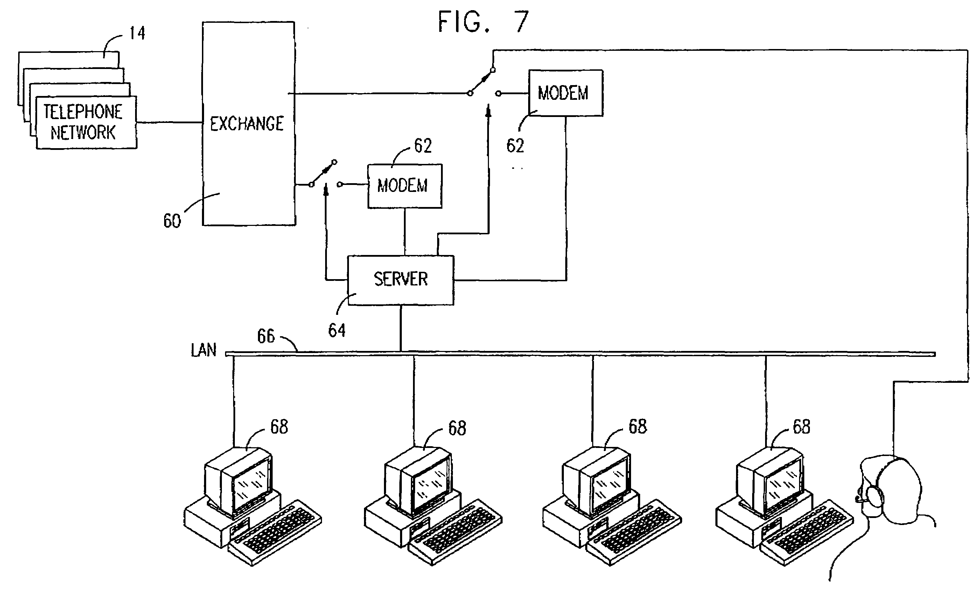

The apparatus preferably comprises a subscriber unit 10 associated with a subscriber telephone 12 which may be connected to a telephone network 14 via a telephone line 16. The subscriber unit may be incorporated into the telephone or may be located separately therefrom. The subscriber unit preferably comprises a modem 18 or other suitable communication device for communicating with a vendor computer system (Fig. 7) via the telephone network 14 and a cryptographic payment protocol processor 20 operative in accordance with a cryptographic payment protocol for effecting secure credit card transactions with the vendor computer system, Alternatively, when an ISDN protocol or DTMF signaling is used there may be no need for a modem. Cryptographic payment protocol processors and their operations are in the public domain, such as http://www.mastercard.com/set/set.htm on the World Wide Web. The cryptographic payment protocol processor 20 operates in conjunction with a smart card reader/writer 22 and a user's smart card 24.

In accordance with a preferred embodiment of the present invention, there is provided a voice annunciator 26 operative to provide voice communication to a subscriber via the subscriber telephone and a DTMF processor 28 responsive to DTMF inputs at the subscriber telephone 12.

In accordance with a preferred embodiment of the present invention, the subscriber unit 10 includes a selectably actuatable security barrier operator operative to disable voice communication between the subscriber telephone 12 and the telephone network 14 without interfering with computer communications between the telephone network 14 and the cryptographic payment protocol processor 20, the modem 18 and the voice annunciator 26. The security barrier is preferably embodied in the processor 20 and is actuated by a switch 30, which may be manually or otherwise actuable. Actuation of the switch 30 preferably results in a visual indication being given to a user by means of a suitable indicator, such as a LED 32.

In accordance with a preferred embodiment of the present invention, the purity barrier has a normal mode of operation and a secure mode of operation, wherein in the normal mode of operation, when switch 30 is not actuated, the security barrier does not disable voice communication and the subscriber telephone 12 can be used in a conventional manner. When the security barrier is actuated to be in the secure mode of operation by switch 30 the security barrier does disable voice communication and permits computer communication according to the cryptographic payment protocol between the subscriber unit 10 and the vendor computer system via the telephone network.

The operation of the embodiment shown in Fig. 1 when the security barrier is actuated may be summarized as follows: During operation, the voice annunciator 26 provides to the user, via the telephone 12 verbal information about transaction details. The DTMF processor 28 receives DTMF responses from the user via the DTMF keyboard on telephone 12. When the LED 32 is illuminated, the customer is assured that the verbal information originates from the cryptographic payment processor 20 and is not originating from a spurious or fraudulent source. In this way, the user is ensured that the transaction details that he hears are exactly those which are being presented to the cryptographic payment processor 20.

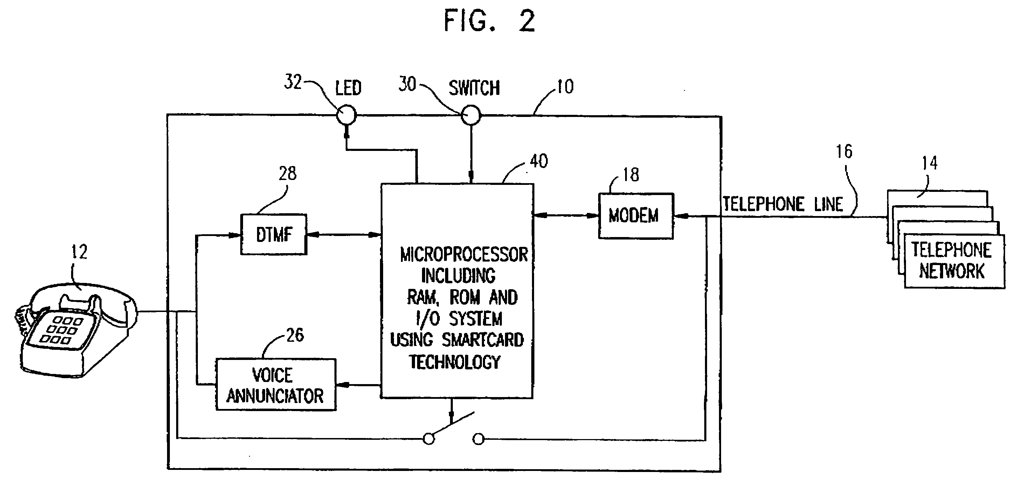

Reference is now made to Fig. 2, which is a simplified block diagram illustration of apparatus for facilitating secure electronic commerce via the telephone constructed and operative in accordance with another preferred embodiment of the present invention. The embodiment of Fig. 2 differs from that of Fig. 1 in that it employs a processor 40 including an internal smart card like device rather than a removable smart card as in the embodiment of Fig. 1. The operation of the embodiment of Fig. 2 is essentially the same as that described hereinabove.

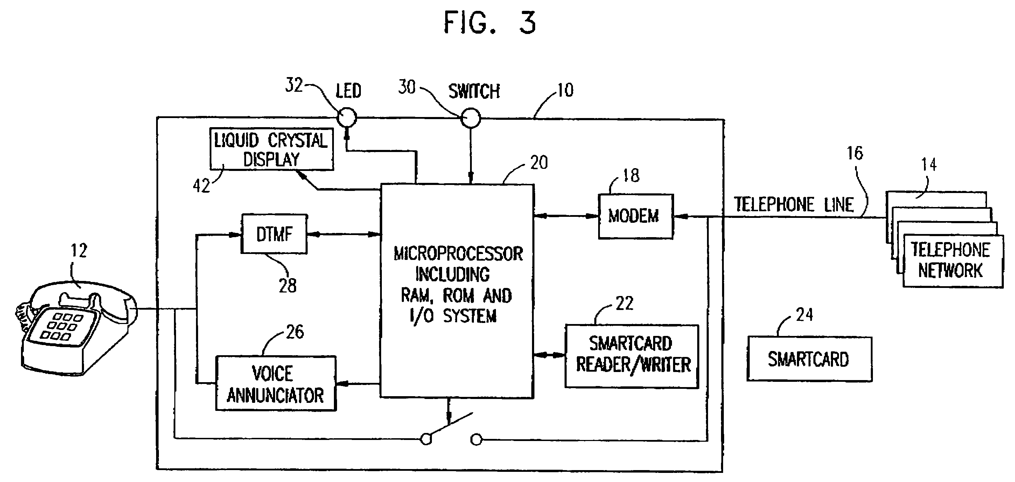

Reference is now made to Fig. 3, which is a simplified block diagram illustration of apparatus for facilitating secure electronic commerce via the telephone constructed and operative in accordance with yet another preferred embodiment of the present invention. The embodiment of Fig. 3 differs from that of Fig. 1 in that it also employs a liquid crystal display 42 for providing visual information to the user, in addition to or in place of the audio information that he receives via the telephone 12 and in addition to or in place of the illumination of the LED 32.

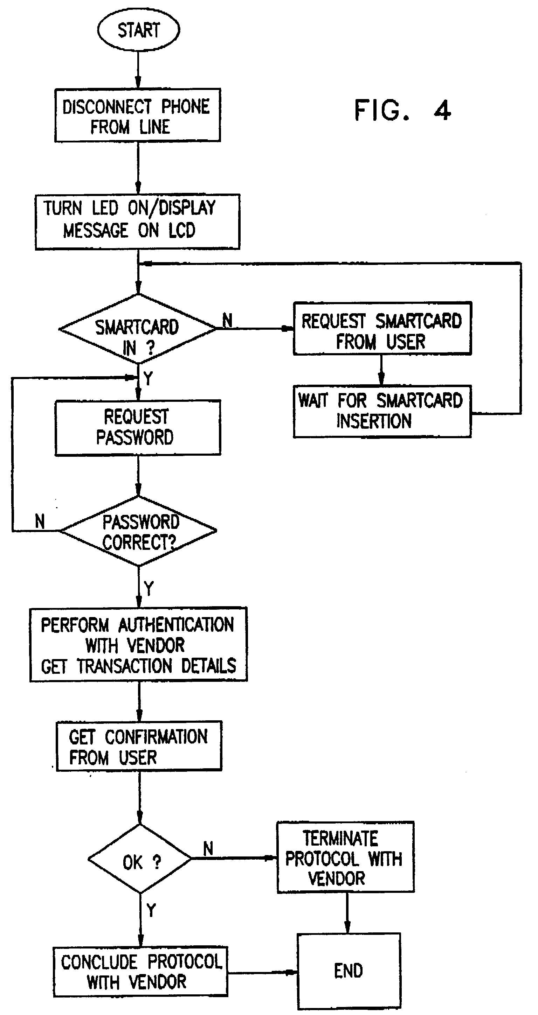

Reference is now made to Fig. 4, which is a simplified flow chart illustrating operation of the apparatus of the present invention according to any of the embodiments of Figs. 1 - 3. Upon actuation of switch 30, the secure mode of operation is initiated and the telephone 12 is disconnected from the telephone line 16 and LED 32 is illuminated. For the embodiment of Fig. 3, a suitable message is displayed by the LCD 42.

Disconnection of the telephone 12 from telephone line 16 ensures that voice messages provided by the voice annunciator 26 to the user are not heard by the vendor or other entities with whom communication exists via the telephone network 14. Similarly the DTMF password entry and authorization are not transmitted to the vendor or other entities with whom communication exists via the telephone network 14, and the vendor cannot influence password entry and authorization. Conversely the cryptographic payment protocol communication between processor 20 and the vendor via the telephone line 16 and telephone network 14 is not heard by the user.

It is appreciated that actuation of the secure mode may be initiated alternatively by means of a DTMF input to the telephone 12 or by a DTMF or other in-band input at the vendor's side. Deactuation of the secure mode may be achieved by any of the above-mentioned user actions or automatically by the completion of the cryptographic payment protocol, if the line fails or if either party goes On-Hook.

Where a removable smart card is employed, as in the embodiment of Fig 1, if the smart card is not in the reader/writer 22, the user is prompted to insert the smart card. The user is then prompted to insert his password via DTMF. Once the password has been checked for correctness, authentication is carried out vis-a-vis a vendor using the cryptographic payment protocol and transaction details are supplied to the user via telephone 12 and annunciator 26 as in the embodiments of Figs. 1 and 2, and/or via display 42 as in the embodiment of Fig. 3. Upon completion or termination of the transaction, the secure mode operation is terminated manually or automatically.

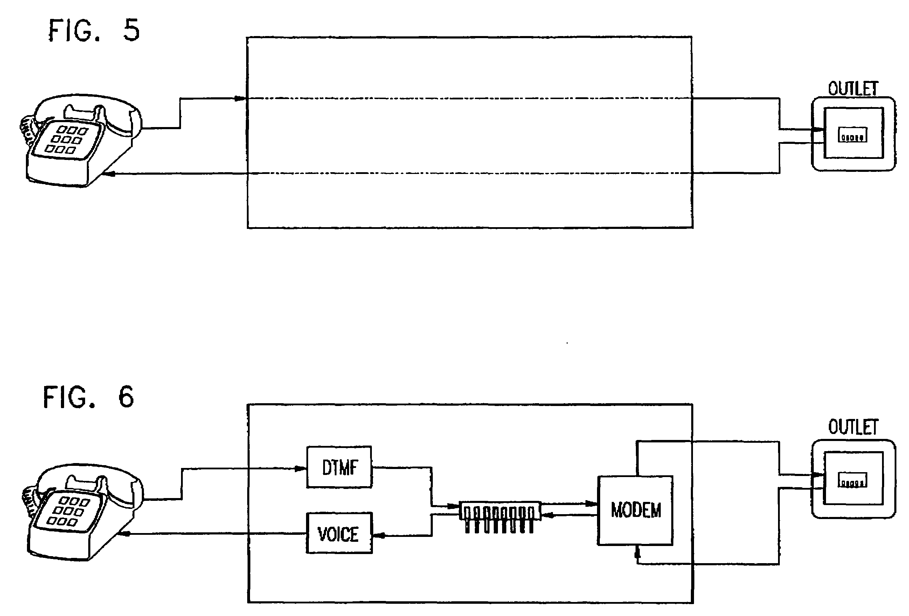

Fig. 5 illustrates the effective circuit connection when the apparatus of Fig. 1 operates in the normal mode. It is seen that all of the apparatus in the subscriber unit 10 is effectively transparent.

Fig. 6 illustrates the effective circuit connection when the apparatus of Fig. 1 operates in the secure mode. In secure mode, the microprocessor maintains two separate and unconnected communication channels. One is with the user, though the voice annunciator and DTMF processor, and is used to inform the user of the transaction details and ask for smartcard insertion (if necessary), password entry, and authorization. The other is with the vendor, through the modem, and is used to carry out the cryptographic payment protocol. The two conversations are only related through specific functions under the control of the microprocessor, and sensitive user data is not communicated to the vendor.

Reference is now made to Fig. 7, which is a simplified block diagram illustrating apparatus located at a vendor site for operation of the present invention. The apparatus typically includes a private telephone exchange 60 such as a PABX to which are connected various modems 62 which are in turn connected to a LAN server 64 which supports a LAN 66 to which are connected multiple computer and telephone stations 68 which provide both computer and telephone communications for an operator.

Normally, the server 64 provides each computer and telephone station 68 via the LAN 66 with an electronic form providing the user details without the user password. Each operator station is connected to the telephone exchange with two channels: a voice channel connected to the operator's headset, and a data channel connected through the modem to the operator's terminal. When a conversation with the user is in progress, the operator talks to the user through the headset in the normal way. At this time, the subscriber unit functions in normal (transparent) mode. When the time has come to perform the electronic payment transaction, the subscriber unit is switched to secure mode and communicates with the operator terminal in this mode. At this time, the voice communication is suspended (progress feedback is supplied to the operator via his terminal and to the subscriber via his telephone). After the electronic payment protocol has finished, the call can be terminated, or restored to voice communication.

It is appreciated by those skilled in the art that although the previous embodiments are described with reference to DTMF, nevertheless the present invention may also be carried out by using other devices such as a keypad or a voice recognition device, *mutatis mutandis*.

It will be appreciated by persons skilled in the art that the present invention is not limited by what has been particularly shown and described hereinabove. Rather the scope of the present invention includes both combinations and subcombinatIons of the various features described hereinabove as well as variations and modifications thereof which would occur to a person skilled in the art upon reading the foregoing description and which are not in the prior art.

## Claims

1. Apparatus for facilitating secure electronic commerce via the telephone comprising:
a subscriber unit associated with a subscriber telephone which may be connected to a telephone network; and
a vendor unit associated with a vendor telephone system and vendor computer system, which may communicate with said subscriber unit via said telephone network,
said subscriber unit comprising:
a communication device for communicating with said vendor computer system and with said subscriber;
a processor operative in accordance with a cryptographic payment protocol for effecting secure payment transactions with said vendor computer system, and
a human interface device operative to provide information to a subscriber; characterized by:
a selectably actuatable security barrier operator operative to disable voice communication between said subscriber telephone and said telephone network without interfering with computer communications between said subscriber unit and said telephone network.

2. Apparatus for facilitating secure electronic commerce via the telephone according to claim 1 and wherein said communication device includes a modem for communicating with said vendor computer system.

3. Apparatus for facilitating secure electronic commerce via the telephone according to claim 1 or claim 2 and wherein said human interface device includes a voice annunciator operative to provide voice communication to a subscriber via the subscriber telephone.

4. Apparatus for facilitating secure electronic commerce via the telephone according to claim 1, 2 or 3 and wherein said communication device includes a DTMF processor responsive to DTMF inputs at the subscriber telephone.

5. Apparatus for facilitating secure electronic commerce via the telephone according to claim 1, 2, 3 or 4 and wherein said communication device includes a voice recognizer responsive to voice inputs at the subscriber telephone.

6. Apparatus for facilitating secure electronic commerce via the telephone according to claim 1 and wherein said security barrier is operative to disable voice communication between said subscriber telephone and said telephone network without interfering with computer communication between said subscriber unit and said telephone network, said security barrier having a normal mode of operation and a secure mode of operation, wherein:
in said normal mode of operation the security barrier does not disable voice communication and the subscriber telephone can be used in a conventional manner, and
when actuated to be in said secure mode of operation, the security barrier does disable voice communication and permits computer communication according to said cryptographic payment protocol between said subscriber unit and said vendor computer system via said telephone network.

7. Apparatus according to any of the preceding claims and wherein said human interface device is operative during operation in said secure mode of operation to communicate information and questions to the subscriber, who can respond to said subscriber telephone.

8. Apparatus according to any of the preceding claims and wherein said subscriber unit includes an indicator, indicating to a subscriber when the subscriber unit is operating in said secure mode of operation.

9. Apparatus according to any of the preceding claims and wherein said security barrier may be actuated by the subscriber or by said vendor computer system or vendor telephone system.

10. Apparatus according to claim 9 and wherein said security barrier may be actuated by the subscriber either by manual actuation of a switch on the subscriber unit or by a DTMF input or by a voice input.
